# EUROPÄISCHE PATENTSCHRIFT

(11) **EP 2 626 227 B1**
(45) Veröffentlichungstag und Bekanntmachung des Hinweises auf die Patenterteilung: **30.07.2014**
(21) Anmeldenummer: 13153187.3
(22) Anmeldetag: 30.01.2013
(51) Int. Cl.: B60K 11/04

(54) **Kraftfahrzeug mit einem fahrzeugmotorbetriebenen Aufbau**
Motor vehicle with an attachment driven by the vehicle engine
Véhicule automobile avec un montage actionné par moteur de véhicule

(30) Priorität: 10.02.2012 AT 500102012
(43) Veröffentlichungstag der Anmeldung: 14.08.2013
(73) Patentinhaber: Eschlböck Maschinenbau GmbH, 4731 Prambachkirchen (AT)
(72) Erfinder: Eschlböck, Rudolf, 4731 Prambachkirchen (AT)
(74) Vertreter: Hübscher, Helmut

(56) Entgegenhaltungen:
- EP-A1- 1 306 637
- EP-A1- 1 903 149
- EP-A2- 1 923 300
- WO-A1-2004/009427
- DE-A1- 3 942 010
- US-A1- 2003 168 034

## Beschreibung

Die Erfindung betrifft ein Kraftfahrzeug mit einem fahrzeugmotorbetriebenen Aufbau, insbesondere einer Holzhackmaschine mit gegebenenfalls einem Ladekran, und mit einer wenigstes zwei Kühler und wenigstens einen in eine Abdeckhaubenöffnung eingesetzten Lüfter umfassenden Kühlanlage, wobei die Kühler, insbesondere ein Wasserkühler und ein Ladeluftkühler, zumindest im Wesentlichen versatzfrei in einer Ebene zueinander benachbart angeordnet sind.

Derartige, die Erfindung betreffende Fahrzeuge weisen einen leistungsstarken, fahrzeugmotorbetriebenen Aufbau auf, der mechanisch oder hydraulisch über einen Nebenantrieb vom Fahrzeugmotor angetrieben wird. Derartige Nebenantriebe zählen seit langer Zeit zum Stand der Technik und dienen insbesondere dazu die hohe Leistung des Fahrzeugmotors bei stehendem Kraftfahrzeug in einer dem Aufbau zugeordneten Arbeitsmaschine nutzen zu können. So wird beispielsweise ein eine Holzhackmaschine umfassender Aufbau mit dem Kraftfahrzeug zum jeweiligen Einsatzort verfahren, das Fahrzeug am Einsatzort abgestellt, die Holzhackmaschine betrieben und gegebenenfalls mit einem ebenfalls am Fahrzeug angeordneten Ladekran beladen, der gegebenenfalls von einer vom Fahrzugmotor angetriebenen Hydraulik versorgt wird.

Ein wesentlicher Nachteil derartiger Konstruktionen liegt darin, dass die serienmäßigen LKW-Kühler für derartige Einsatzzwecke zu wenig Kühlleistung besitzen. Dies insbesondere, da kein zusätzlicher Fahrtwind, sondern lediglich der Lüfter, zur Kühlung zur Verfügung steht, was bedingt, dass der am Stand betriebene LKW-Motor beim Abrufen der vollen Leistung nicht ordnungsgemäß gekühlt wird, gegebenenfalls überhitzt und unter Umständen auch Motorschäden auftreten können.

Um die Motorleistung und somit die Hackleistung im Betrieb nicht drosseln zu müssen, ist es bei bekannten Vorrichtungen vorgesehen, am Aufbau zusätzliche Kühler vorzusehen, die mit gesonderten Lüftern ausgestattet sind. Dies bedingt aber einen erheblichen Mehraufwand und auch einen hohen Platzbedarf. Zusätzlich bewirkt die staubige Umgebungsluft beim Holzzerkleinern in Folge des dabei entstehenden Holzstaubes eine weitere Beeinträchtigung der Kühlleistungen der bekannten Kühler. Der Holzstaub setzt sich am und in den Kühlern fest. Insbesondere die serienmäßigen LKW-Kühler, die aus einem Kühlerblock aus in Serie verschalteten Kühlern, insbesondere Wasser- und Ladeluftkühler, bestehen sind für ein Zusetzen durch Holzstaub anfällig. Der Holzstaub setzt sich dabei im Betrieb zwischen den in Serie verschalteten Kühlern fest und verhindert ein ordnungsgemäßes Durchströmen der Kühlluft durch die Kühler, was die Kühlleistung in weiterer Folge auch im Fahrbetrieb beeinträchtigt bzw. dermaßen weit herabsetzt, dass es wiederum zu Schäden am System kommen kann.
Die EP 1 306 637 A1 offenbart ein Kraftfahrzeug, nämlich einen Mähdrescher, mit einem fahrzeugmotorbetriebenen Aufbau und mit einer wenigstens zwei Kühler und wenigstens einen in eine Abdeckhaubenöffnung eingesetzten Lüfter umfassenden Kühlanlage, wobei die Kühler, insbesondere ein Wasserkühler und ein Ladelüftkühler, zumindest im wesentlichen versatzfrei in einer Ebene zueinander benachbart angeordnet sind. Dieses Kühlerpaket ist an einer Fahrzeugseite neben der Verbrennungskraftmaschine angeordnet. Gesonderte Einrichtungen zum Abreinigen der Kühler sind nicht vorgesehen.

Darüber hinaus offenbaren die EP 1 923 300 A2 und die WO 2004/0094720 A1 Kühlanlagen mit je wenigstens zwei Kühlern, die zumindest im Wesentlichen versatzfrei in einer Ebene zueinander benachbart angeordnet sind. Auch aus diesen Druckschriften ist weder das Problem der Abreinigung der Kühlanlage bekannt, noch sind entsprechende Mittel dafür vorgesehen.

Aus der DE 39 42 010 A1 ist es bekannt, in einer Abdeckhaube eines Kühlers eine Kühlluftklappe vorzusehen, die nur dann zu öffnen ist, wenn dies zur Kühlung eines Kraftfahrzeuges unbedingt nötig ist. Dazu wird die Kühlklappe ab einer bestimmten Fahrzeuggeschwindigkeit abhängig von der Temperatur der Brennkraftmaschine geöffnet, um den Kühlluftdurchfluss durch den Kühler zu erhöhen.

Ausgehend von einem derartigen Stand der Technik liegt der Erfindung die Aufgabe zugrunde, ein Kraftfahrzeug mit einem fahrzeugmotorbetriebenem Aufbau anzugeben, dass auch unter staubigsten Bedingungen stets eine ordnungsgemäße Kühlung des Fahrzeugmotors gestattet, wobei ein Zusetzen der Kühlanlage mit Staub vermieden werden soll bzw. eine einfache und schnelle Reinigung des Kühlsystems von Staub möglich sein soll.

Die Erfindung löst diese Aufgabe dadurch, dass die wenigstens zwei Kühler im Motorraum in Fahrtrichtung vor dem Fahrzeugmotor angeordnet sind und dass die Kühlflächen der wenigstens zwei Kühler rückseitig von einer Abdeckhaube überdeckt sind, deren Unterseite wenigstens eine verschließbare Reinigungsöffnung zugehört, die mit einem im Schließsinn federbelasteten Deckel verschließbar ist, der durch den Staudruck einer Waschflüssigkeit öffenbar ist.

Das neue erfindungsgemäße Kühlsystem hat den Vorteil, dass es im gleichen Einbauraum, wie der Serienkühler im LKW Platz findet, wobei allerdings der Serienkühler durch zwei benachbart nebeneinander oder übereinander angeordnete Kühler ersetzt wird. Dies hat zudem den Vorteil, dass gegebenenfalls die serienmäßig im Fahrzeug vorhandenen Kühleranschlussleitungen verwendet werden können und nur der Serienkühler auszubauen und durch das neue Kühlersystem zu ersetzen ist, wobei der neue Kühler vorzugsweise eine maximal mögliche, im Motorraum unterbringbare Kühlerfläche aufweist. Dadurch, dass die Kühler nicht mehr, wie im Stand der Technik üblich, in Serie, sondern nebeneinander, also parallel, im Fahrzeug verbaut sind, kann sich auch kein Schmutz mehr in einem Bereich ansammeln, der in weiterer Folge praktisch nicht mehr abgereinigt werden kann, wie der Bereich zwischen den in Serie verschalteten Serienkühlern. Die Kühler können vom Gebläse somit unmittelbar gereinigt werden und es steht im Betrieb des fahrzeugmotorbetriebenen Aufbaus auch in staubiger Umgebung stets eine ausreichende Kühlleistung zu Verfügung.

Besonders gute Kühlverhältnisse ergeben sich dadurch, dass die Kühlflächen der wenigstens zwei Kühler rückseitig von einer Abdeckhaube überdeckt sind, deren Unterseite wenigstens eine verschließbare Reinigungsöffnung zugehört. Diese allgemein bekannte Abdeckhaube, welche eine Abdeckhaubenöffnung aufweist, in welche der Lüfter eingesetzt ist, sorgt auch bei stehendem Fahrzeug dafür, dass der Lüfter für einen ordnungsgemäßen Kühlluftdurchsatz über den gesamten Kühlerquerschnitt sorgen kann. Um sich im Bereich zwischen Kühler und Abdeckhaube gegebenenfalls unweigerlich ansammelnden Staub auch problemlos wieder aus dem System ausbringen zu können, ist auf der Abdeckhaubenunterseite wenigstens eine Reinigungsöffnung vorgesehen. Durch diese Reinigungsöffnung könnte in einem Reinigungszyklus Staub ausgeblasen bzw. ausgewaschen werden. Im einfachsten Fall wird der Kühler zur Reinigung von der Kühlerfront her mit einem Hochdruckreiniger abgereinigt und der Staub durch die Kühllamellen in den Bereich zwischen Kühler und Abdeckhaube ausgewaschen, von wo der von der Reinigungsflüssigkeit gebundene Staub durch die Reinigungsöffnung abfließen kann.

Anschlussmäßig empfiehlt es sich, wenn der Ladeluftkühler über dem Wasserkühler angeordnet ist, da dann keine aufwändigen Umbauarbeiten erforderlich sind.

Ein erfindungsgemäßes neues Kühlsystem hat den Vorteil, eine erhöhte Kühlleistung bereitstellen zu können, da diese Anordnung gegenüber dem Stand der Technik tiefere Kühllamellen ermöglicht. Insbesondere entspricht die Tiefe der Kühllamellen eines Kühlers nunmehr rund der Summe der beiden alten Serienkühler plus dem Zwischenraum zwischen den Serienkühlern. Die Kühlerfläche wird somit um wenigstens den Zwischenraum vergrößert. Der Kühlraum wird aber nicht nur besser ausgenutzt, sondern es werden auch Ablagerungen am Kühlsystem vermieden.

Eine weiter Vergrößerung der Kühlerflächen kann, im Gegensatz zu den in Serie geschalteten Serienkühlern dadurch erreicht werden, dass der Kühlwasserausgleichsbehälter, der normalerweise über dem Serienkühler montiert ist, an einer anderen Position untergebracht wird, womit mehr Platz und dadurch mehr Kühlfläche für die parallel geschalteten Kühler zur Verfügung steht.

Insbesondere empfiehlt es sich, wenn die Reinigungsöffnung abdeckhaubenbodenseitig und/oder abdeckhaubenbodenrückseitig vorgesehen ist. Dadurch ist gewährleistet, dass das Waschwasser problemlos ohne weitere Maßnahmen ablaufen kann und sich nicht festsetzt und gegebenenfalls nach Abtrocknung des Waschwassers wiederum die Kühlung beeinträchtigt.

Die Öffnung kann beispielsweise mit einem im Schließsinn federbelasteten Deckel, Sieber od. dgl. verschließbar sein, der sich durch den Staudruck der Waschflüssigkeit öffnet bzw. auch manuell geöffnet werden kann. Zudem besteht die Möglichkeit, die Stellung des die Reinigungsöffnung verschließbaren Deckels, Schiebers oder dgl., insbesondere thermostatgesteuert, zu steuern oder zu regeln. So kann der Deckel beispielsweise bei kühlen Temperaturen geöffnet und bei höheren Temperaturen geschlossen werden, um zu gewährleisten, dass der Lüfter im Betrieb keine Fehlluft durch die Reinigungsöffnung saugt und alle Kühlluft durch den Kühler gesaugt wird.

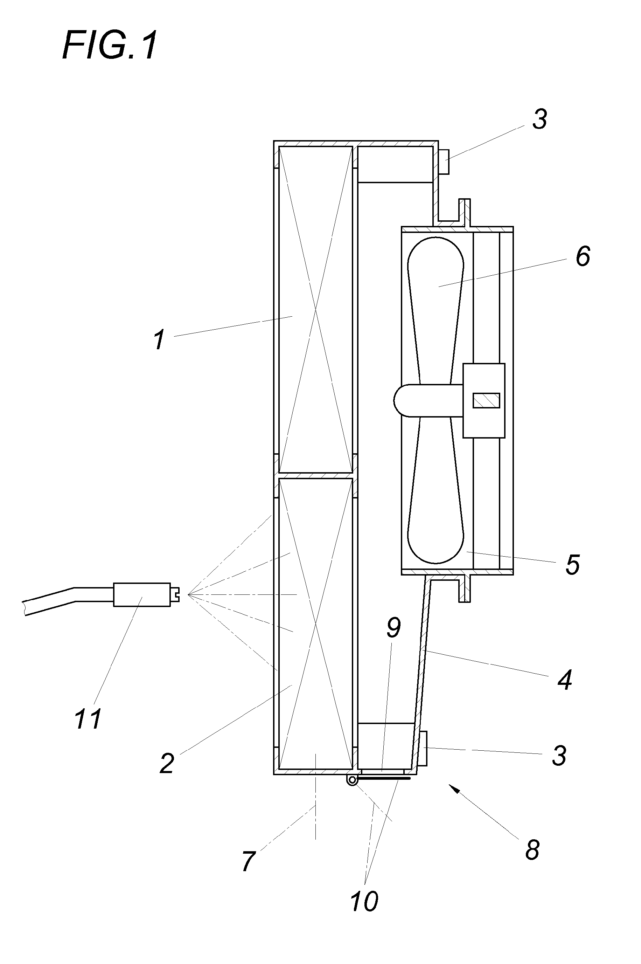

In der Zeichnung ist die Erfindung anhand eines Ausführungsbeispiels schematisch dargestellt. Es zeigen
Fig. 1 eine Kühlanlage im teilgeschnittenen Querschnitt und

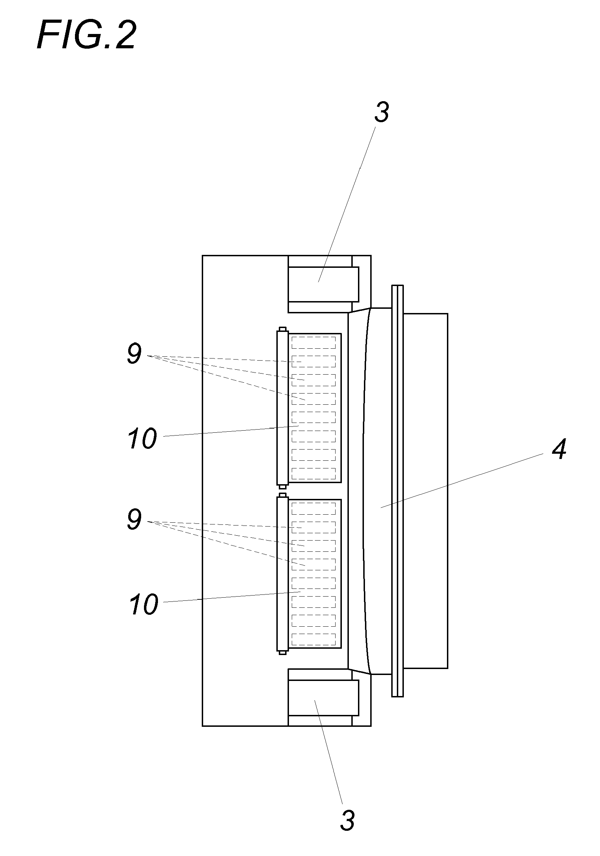

Fig. 2 die Kühlanlage aus Fig. 1 in verkleinerter Unteransicht.

Ein nicht näher dargestelltes Kraftfahrzeug ist mit einem fahrzeugmotorbetriebenen Aufbau ausgestattet, insbesondere einer Holzhackmaschine mit gegebenenfalls einem Ladekran und mit wenigstens zwei Kühlern 1, 2, insbesondere einem Wasserkühler und einem Ladeluftkühler. Die beiden Kühler 1, 2 sind werkseitig zu einem Kühlerblock zusammengeschlossen, wobei die Kühler 1, 2 zwei Anschlüsse, einer je Kühler für den Zulauf und einer für den Ablauf, vorgesehen sind. Diese Anschlüsse sind in den Zeichnungen mit 3 angedeutet. Zudem ist der Kühlerverbund rückseitig mit einer Abdeckhaube 4 ausgestattet, welche Abdeckhaube 4 eine Abdeckhaubenöffnung 5 aufweist, in die ein Lüfter 6 eingesetzt. Die Kühler 1, 2, die Abdeckhaube 4 und der Lüfter 6 sind in allgemein bekannter Weise Teile der Kühlanlage eines Kraftfahrzeuges.

Um vorteilhafte Kühlverhältnisse unter staubigen Bedingungen zu schaffen, wird vorgeschlagen, dass die wenigstens zwei Kühler 1, 2, insbesondere Wasserkühler und der Ladeluftkühler, zumindest im Wesentlichen versatzfrei in einer Ebene 7 zueinander benachbart im Motorraum in Fahrtrichtung vor dem Fahrzeugmotor angeordnet sind. Im dargestellten Ausführungsbeispiel ist der Ladeluftkühler 1 über dem Wasserkühler 2 angeordnet. Zudem sind die Kühlerflächen der Kühler 1 und 2 vollflächig rückseitig von der Abdeckhaube 4 überdeckt, deren Unterseite 8 eine verschließbare Reinigungsöffnung 9 zugehört. Diese Reinigungsöffnung 9 ist im dargestellten Ausführungsbeispiel im Abdeckraumboden angeordnet, könnte aber auch abdeckhaubenbodenseitig im Bereich der Abdeckhaubenrückseite, beispielsweise zwischen den Anschlüssen 3 vorgesehen sein. Der dargestellte, die Reinigungsöffnung 9 gegebenenfalls verschließende Deckel 10 ist im Schließsinn mit einer Feder vorbelastet.

Soll das Kühlsystem vom Staub befreit werden, wird es beispielsweise mit einem Hochdruckreiniger 11 mit Reinigungsflüssigkeit angespritzt, welche die Kühllamelle auswäscht und im Bereich zwischen Kühlern und Abdeckhaube durch die Reinigungsöffnung 9 unter Öffnung des Deckels aus dem Bereich zwischen Kühler und Abdeckhaube wieder austreten kann.

## Patentansprüche

1. Kraftfahrzeug mit einem fahrzeugmotorbetriebenen Aufbau, insbesondere einer Holzhackmaschine mit gegebenenfalls einem Ladekran, und mit einer wenigstes zwei Kühler (1, 2) und wenigstens einen, in eine Abdeckhaubenöffnung (5) eingesetzten, Lüfter (6) umfassenden Kühlanlage, wobei die Kühler (1, 2), insbesondere ein Wasserkühler und ein Ladeluftkühler, zumindest im Wesentlichen versatzfrei in einer Ebene (7) zueinander benachbart angeordnet sind, **dadurch gekennzeichnet, dass** die wenigstens zwei Kühler (1, 2) im Motorraum in Fahrtrichtung vor dem Fahrzeugmotor angeordnet sind und dass die Kühlflächen der wenigstens zwei Kühler rückseitig von einer Abdeckhaube (4) überdeckt sind, deren Unterseite (8) wenigstens eine verschließbare Reinigungsöffnung (9) zugehört, die mit einem im Schließsinn federbelasteten Deckel (10) verschließbar ist, der durch den Staudruck einer Waschflüssigkeit öffenbar ist.

2. Kraftfahrzeug nach Anspruch 1, **dadurch gekennzeichnet, dass** der Ladeluftkühler (1) über dem Wasserkühler (2) angeordnet ist.

3. Kraftfahrzeug nach Anspruch 1 oder 2, **dadurch gekennzeichnet**, Kraftfahrzeug nach Anspruch 3, **dadurch gekennzeichnet, dass** die Reinigungsöffnung (9) abdeckhaubenbodenseitig und/oder abdeckhaubenbodenrückseitig vorgesehen ist.

4. Kraftfahrzeug nach einem der Ansprüche 1 bis3, **dadurch gekennzeichnet, dass** die Stellung des die Reinigungsöffnung (9) verschließbaren Deckels (10) über einen kühlwassertemperaturgeregelten Stelltrieb, insbesondere thermostatgesteuert, steuerbar oder regelbar ist.

5. Kraftfahrzeug nach einem der Ansprüche 1 bis4, **dadurch gekennzeichnet, dass** der Reinigungsöffnung mit einem Deckel (10) oder Schieber verschließbar ist, der bei kühlen Temperaturen geöffnet und bei höheren Temperaturen geschlossen ist.

## Claims

1. Motor vehicle having a vehicle engine-driven structure, in particular a wood-chipping machine also having a loading crane, and having a cooling plant comprising at least two coolers (1, 2) and at least one fan (6) which is inserted into a hood opening (5), wherein the coolers (1, 2), in particular a water cooler and a charge air cooler, are disposed adjacent to one another in an at least substantially non-offset manner in a plane (7), **characterised in that** the at least two coolers (1, 2) are disposed in the engine compartment upstream of the vehicle engine in the direction of travel and that the cooling surfaces of the at least two coolers are covered to the rear by a hood (4), to the underside (8) of which appertains at least one closable cleaning opening (9) which can be closed with a cover (10) which is spring loaded in the closing direction and which can be opened by the back pressure of a cleaning liquid.

2. Motor vehicle as claimed in claim 1, **characterised in that** the charge air cooler (1) is disposed above the water cooler (2).

3. Motor vehicle as claimed in claim 1 or 2, **characterised in that** the cleaning opening (9) is provided on the base side of the hood and or rear of the base of the hood.

4. Motor vehicle as claimed in any one of claims 1 to 3, **characterised in that** the position of the cover (10) which can close the cleaning opening (9) can be controlled or adjusted in particular in a thermostat-controlled manner by means of an actuator which is regulated by the cooling water temperature.

5. Motor vehicle as claimed in any one of claims 1 to 4, **characterised in that** the cleaning opening can be closed by a cover (10) or slide which is open at cool temperatures and is closed at higher temperatures.

## Revendications

1. Véhicule automobile avec un montage actionné par moteur de véhicule, en particulier, une machine pour déchiqueter du bois, avec le cas échéant une grue de chargement, et avec une installation de refroidissement comprenant au moins deux refroidisseurs (1, 2) et au moins un ventilateur (6) mis en place dans une ouverture de capot (5), les refroidisseurs (1, 2), en particulier un refroidisseur d'eau et un refroidisseur d'air de suralimentation, étant disposés contigus au moins sensiblement sans décalage dans un plan (7), **caractérisé en ce qu'**au moins les deux refroidisseurs (1, 2) sont disposés dans le compartiment moteur dans le sens de marche, avant le moteur du véhicule, et **en ce que** les faces de refroidissement des au moins deux refroidisseurs sont recouvertes à l'arrière par un capot (4), dont la face inférieure (8) appartient au moins à une ouverture de nettoyage (9) obturable qui peut être obturée avec un couvercle (10) à ressort dans le sens de fermeture qui peut être ouvert par la pression dynamique d'un liquide de lavage.

2. Véhicule automobile selon la revendication 1, **caractérisé en ce que** le refroidisseur d'air de suralimentation (1) est disposé au-dessus du refroidisseur d'eau (2).

3. Véhicule automobile selon la revendication 1 ou 2, **caractérisé en ce que** l'ouverture de nettoyage (9) est prévue côté fond de capot et/ou côté arrière fond de capot.

4. Véhicule automobile selon l'une des revendications 1 à 3, **caractérisé en ce que** la position du couvercle (10) pouvant fermer l'ouverture de nettoyage (9) peut être commandée, ou réglée, par le biais d'un actionneur à température contrôlée d'eau de refroidissement, en particulier commandé par thermostat.

5. Véhicule automobile selon l'une des revendications 1 à 4, **caractérisé en ce que** l'ouverture de nettoyage est obturable avec un couvercle (10) ou un coulisseau qui est ouvert en présence de températures froides et fermé en présence de températures plus élevées.
